# EUROPÄISCHE PATENTSCHRIFT

(11) **EP 2 988 154 B1**
(45) Veröffentlichungstag und Bekanntmachung des Hinweises auf die Patenterteilung: **06.10.2021**
(21) Anmeldenummer: 15002379.4
(22) Anmeldetag: 10.08.2015
(51) Int. Cl.: G02B 3/00, B29D 11/00, B42D 25/29, B42D 25/387, B42D 25/382, B42D 25/378, B42D 25/369, B42D 25/36, B42D 25/351, B42D 25/324, G02B 30/22

(54) **VERFAHREN ZUM HERSTELLEN EINES OPTISCHEN ELEMENTES UND OPTISCHES ELEMENT**
METHOD FOR PRODUCING OPTICAL ELEMENT AND OPTICAL ELEMENT
PROCEDE DE FABRICATION D'UN ELEMENT OPTIQUE ET ELEMENT OPTIQUE

(30) Priorität: 20.08.2014 DE 102014012375
(43) Veröffentlichungstag der Anmeldung: 24.02.2016
(73) Patentinhaber: Giesecke+Devrient Currency Technology GmbH, 81677 München (DE)
(72) Erfinder: Schiffmann, Peter, 81673 München (DE); Imhof, Martin, 81927 München (DE); Traub-Mayer, Christine, 81669 München (DE)
(74) Vertreter: Patentanwälte Geyer, Fehners & Partner mbB

(56) Entgegenhaltungen:
- WO-A1-2014/070079
- WO-A2-2006/125224
- DE-A1-102011 117 677
- US-A1- 2007 217 019
- None

## Beschreibung

Die vorliegende Erfindung betrifft ein Verfahren zum Herstellen eines optischen Elementes sowie ein optisches Element an sich.

Optische Elemente werden häufig als Sicherheitselemente für Wertdokumente, wie z.B. Banknoten, Kreditkarten, EC-Karten, Chip-Karten oder dergleichen verwendet.

Es sind optische Elemente bekannt, bei denen auf der Vorderseite eines transparenten oder transluzenten Substrates Linsen und auf der Rückseite des Substrates Informationselemente angeordnet sind, so dass die Informationselemente durch die Linsen beispielsweise vergrößert wahrgenommen werden können.

Bei solchen optischen Elementen ist es häufig notwendig, dass die Linsen genau zu den Informationselementen ausgerichtet sind, um den gewünschten optischen Effekt zu erzielen.

Die Herstellung eines solchen optischen Elementes ist schwierig, da die Linsen beispielsweise lediglich einen Durchmesser von 40 bis 300 µm aufweisen. Somit sind hohe Genauigkeitsanforderungen zu erfüllen.

WO 2014/070079 A1 offenbart ein Verfahren zum Herstellen eines optischen Elementes gemäß dem Oberbegriff des Anspruches 1, bei dem ein Auslaufen oder ungewolltes Verbreitern von gedruckten Linsen vermieden werden kann.

US 2007/0217019 A1 beschreibt ein Verfahren, mit dem Linsen für LEDs, Displays oder Solarzellen hergestellt werden können. DE 10 2011117 677 A1 und WO 2006/125224 A2 offenbaren optisch variable Sicherheitselemente, welche Linsen umfassen.

Ausgehend hiervon ist es Aufgabe der Erfindung, ein Verfahren zum Herstellen eines optischen Elementes bereitzustellen, bei dem die Linsen auf einer Seite eines transparenten oder transluzenten Substrates exakt ausgerichtet zu Informationselementen auf der anderen Seite des Substrates gebildet werden können.

Die Erfindung ist in den unabhängigen Ansprüchen 1 und 12 definiert. Erfindungsgemäß wird die Aufgabe durch ein Verfahren zum Herstellen eines optischen Elementes gelöst, bei dem
a) auf einer Rückseite eines transparenten oder transluzenten Substrates Informationselemente gedruckt werden,
b) auf einer Vorderseite des Substrates ein Gitter gedruckt wird, das zu den Informationselementen gepassert ist und erste und zweite Abschnitte aufweist, und
c) auf das Gitter zumindest in Teilbereichen ein Linsenmaterial aufgetragen wird, das von den ersten Abschnitten des Gitters abgestoßen wird, so dass aus dem abgestoßenen Linsenmaterial in den zweiten Abschnitten Linsen gebildet werden.

Das gepasserte Drucken auf zwei Seiten eines Substrates ist mit hoher Genauigkeit möglich. Somit wird in vorteilhafter Weise diese hohe Genauigkeit auch auf die danach gebildeten Linsen übertragen, da das Linsenmaterial von den ersten Abschnitten des Gitters abgestoßen wird und sich somit das Linsenmaterial in den zweiten Abschnitten sammelt und damit Linsen gebi det werden.

Unter Abstoßen wird hier insbesondere verstanden, dass das Linsenmaterial von den ersten Abschnitten des Gitters abperlt oder sie nicht benetzt.

Bei dem erfindungsgemäßen Verfahren werden die Schritte a) und b) bevorzugt gleichzeitig durchgeführt. Dies kann durch einen sogenannten Simultandruck oder Supersimultandruck erfolgen.

Das Gitter kann aus einem Material mit hydrophober oder hydrophiler Eigenschaft gedruckt werden, wobei das Linsenmaterial eine dazu komplementäre Eigenschaft aufweisen kann. Wenn das Gittermaterial hydrophob ist, kann z.B. ein wasserhaltiges und/oder hydrophiles Linsenmaterial verwendet werden.

Bei dem erfindungsgemäßen Verfahren kann die Vorderseite des Substrats eine hydrophobe Eigenschaft aufweisen. Das Gitter wird aus einem farbigen Material mit hydrophiler Eigenschaft gedruckt, wobei das Linsenmaterial so gewählt wird, dass das farbige Material anziehend wirkt. Die hydrophobe Eigenschaft der Vorderseite kann dadurch bereitgestellt werden, dass das Material des Substrates eine hydrophobe Eigenschaft aufweist. Alternativ oder zusätzlich ist es möglich, auf der Vorderseite eine Schicht mit hydrophober Eigenschaft aufzubringen. Ferner können die hydrophoben und hydrophilen Eigenschaften von Substrat und Gitter auch vertauscht sein. So kann die Vorderseite des Substrates eine hydrophile Eigenschaft und das farbige Gittermaterial eine hydrophobe Eigenschaft aufweisen.

Die Informationselemente können farbig sein. Insbesondere können sie die gleiche Farbe oder auch verschiedene Farben aufweisen.

Als Linsenmaterial wird bevorzugt ein transparentes Material verwendet. Es kann als Linsenmaterial z.B. ein Lack aufgetragen werden. Insbesondere kann das Linsenmaterial aufgedruckt werden. Dazu kann z.B. ein Sieb-, Flexo-, Tief- oder Ink-Jet-Druck durchgeführt werden.

Nach dem Schritt c) kann das Linsenmaterial gehärtet werden. Dies kann beispielsweise mittels Wärme und/oder UV-Strahlung erfolgen. Zumindest auf einem Teil der Linsen kann eine reflektierende Schicht aufgebracht werden. Die reflektierende Schicht kann Pigmente aufweisen, die die reflektive Eigenschaft erzeugen. Durch Aufbringen der reflektierenden Schicht wirken die Linsen zusammen mit der reflektierenden Schicht z.B. als Hohlspiegel.

Bei dem erfindungsgemäßen Verfahren kann zumindest auf einen Teil der Informationselemente eine reflektierende und/oder andersfarbige Schicht aufgebracht werden. Ferner kann zumindest auf einen Teil der Informationselemente eine transparente Interferenzschicht aufgebracht werden, deren Interferenzeffekt bei dunklem Hintergrund visuell erkennbar ist. Insbesondere kann die transparente Interferenzschicht so ausgebildet sein, dass der Interferenzeffekt vor einem hellen Hintergrund visuell nicht erkennbar und nur vor einem dunklen Hintergrund visuell erkennbar ist. Bei dem dunklen Hintergrund handelt es sich insbesondere um einen schwarzen Hintergrund. Die transparente Interferenzschicht kann Flüssigkristallpigmente und/oder Dünnschichtinterferenzpigmente (wie z.B. Iriodin-Pigmente) aufweisen. Die Interferenzschicht kann auch als Flüssigkristallschicht ausgebildet sein.

Auf zumindest einen Teil der Informationselemente kann eine Farbschicht aufgedruckt werden, die danach teilweise entfernt und/oder in der in zumindest einem Teilbereich eine Farbänderung (z.B. ein Ausbleichen) bewirkt wird. Damit können weitere optische Effekte bereitgestellt werden, die die Wiedererkennbarkeit des optischen Elementes erhöhen.

Das teilweise Entfernen der Farbschicht und/oder die Farbänderung kann mittels Laserstrahlung bewirkt werden. Dabei kann es sich um eine kontinuierliche Laserstrahlung und/oder eine gepulste Laserstrahlung handeln. Die Farbschicht kann einen Absorber enthalten, der die Laserstrahlung besonders gut absorbiert, so dass die gewünschte Entfernung bewirkt werden kann. Zur Verwirklichung der Farbänderung und insbesondere zum Ausbleichen können beispielsweise organische Farbstoffe eingesetzt werden. Bei dem erfindungsgemäßen Verfahren können die im Schritt a) gedruckten Informationselemente ein zweites Gitter bilden, das erste und zweite Abschnitte aufweist und zu dem im Schritt b) auf die Vorderseite gedruckten Gitter gepassert ist, wobei auf das zweite Gitter ein zweites Linsenmaterial aufgetragen wird, das von den ersten Abschnitten des zweiten Gitters abgestoßen wird, so dass aus dem abgestoßenen zweiten Linsenmaterial in den zweiten Abschnitten des zweiten Gitters zweite Linsen gebildet werden.

Ferner können bei dem erfindungsgemäßen Verfahren auf der Vorderseite neben dem Gitter zweite Informationselemente gedruckt werden, auf der Rückseite ein zweites Gitter gedruckt werden, das erste und zweite Abschnitte aufweist und das zu den zweiten Informationselementen gepassert ist, und kann auf das zweite Gitter ein zweites Linsenmaterial aufgetragen werden, das von den ersten Abschnitten des zweiten Gitters abgestoßen wird, so dass aus dem abgestoßenen zweiten Linsenmaterial in den zweiten Abschnitten des zweiten Gitters zweite Linsen gebildet werden.

Das Gitter und/ oder das zweite Gitter kann Linien, Punkte, Quadrate, Kreise, Ovale, Kreisaussparungen, hexagonale Strukturen, wabenartige Strukturen, quadratische Aussparungen und Kombinationen davon aufweisen. Das Gitter und/oder das zweite Gitter kann als Linien- oder Strichgitter ausgebildet sein.

Das Gitter und/oder das zweite Gitter kann in Form und/oder Größe variierende Strukturen aufweisen, die unmittelbar aneinandergrenzen und/oder voneinander beabstandet sind, wobei der Abstand gleich oder auch variierend sein kann.

Es können somit regelmäßige und unregelmäßige Linsenanordnungen bereitgestellt werden.

Die Informationselemente können eine oder mehrere Farben aufweisen. Sie können Zahlen, Buchstaben, Symbole, Motive, Kombinationen davon oder ein oder mehrere Segmente davon aufweisen.

Die Informationselemente können eine visuell sichtbare Farbe (also aus dem sichtbaren Wellenlängenbereich) oder eine visuell nicht sichtbare Farbe (z.B. aus dem Infrarotbereich oder dem UV-Bereich) aufweisen. Ferner können sie Zusatzmerkmale, wie Lumineszenz, Infraroteigenschaften, elektrische Eigenschaften (wie z.B. elektrische Leitfähigkeit) und/oder magnetische Eigenschaften, aufweisen.

Für die elektrische Leitfähigkeit können insbesondere transparente leitfähige Materialien (TCM) verwendet werden, wie z.B. transparente leitfähige Oxide (TCO). Ein Beispiel eines solchen Materials ist Baytron P (Poly-3,4ethylen-dioxythiophen).

Das Material des Gitters kann so gewählt sein, dass es das Linsenmaterial abstößt. In diesem Fall bilden die Abschnitte des aufgedruckten Gittermaterials die ersten Abschnitte des Gitters und bilden sich die Linsen in den vom Gittermaterial begrenzten zweiten Abschnitten.

Es ist jedoch auch möglich, dass die Abstoßung des Gitters so eingestellt ist, dass sich das abgestoßene Linsenmaterial auf dem Material des Gitters selbst sammelt. Das Gitter stößt somit in diesem Fall das Linsenmaterial so ab, dass es sich dort sammelt, wo Gittermaterial vorhanden ist und in Bereichen, in denen kein Gittermaterial vorhanden ist, nicht oder nur deutlich weniger vorhanden ist. Das Gitter weist erfindungsgemäß z.B. als Gittermaterial ein farbannehmendes Material auf, welches optional auch lackannehmend ausgebildet sein kann und das das Linsenmaterial quasi anzieht, so dass bezogen auf die Bereiche des Gitters ohne Gittermaterial die abstoßende Gitterwirkung vorliegt.

Somit kann das im Schritt b) gedruckte Gitter entweder als Negativ-Gitter (Ansammlung des Linsenmaterials in Abschnitten, in denen das Gittermaterial vorhanden ist) oder als Positivgitter (Ansammlung des Linsenmaterials in Abschnitten, in denen kein Gittermaterial vorhanden ist) verwendet werden. Bei einem Negativ-Gitter entspricht die Form des Gittermaterials damit weitestgehend dem Linsenmotiv(en) bzw. dem Bereich(en), in dem bzw. in denen die Linse(n) gebildet wird bzw. werden.

Der Einsatz als Negativ-Gitter kann z.B. dadurch realisiert werden, dass die nicht mit Gittermaterial bedruckten Abschnitte, die als Teil des Gitters verstanden werden, für das Linsenmaterial abstoßend sind. Alternativ ist es möglich, dass das Gittermaterial eine gewisse anziehende Wirkung für das Linsenmaterial aufweist, so dass relativ gesehen die Abschnitte, in denen kein Gittermaterial vorhanden ist, für das Linsenmaterial abstoßend wirken.

Natürlich ist es auch möglich, dass für das Gitter zunächst eine erste Schicht auf die Vorderseite des Substrats gedruckt wird und darauf eine strukturierte zweite Schicht (auch die erste Schicht kann strukturiert sein). Die beiden Schichten weisen unterschiedliche Eigenschaften auf, so dass sich das Linsenmaterial nur auf einer der beiden Schichten sammelt und somit von der anderen der beiden Schichten abgestoßen wird.

Als Material für das Gitter kann beispielsweise eine transparente Farbe verwendet werden. Ferner kann auch eine nicht transparente Farbe eingesetzt werden.

Ferner können noch Zusatzinformationen gepassert zum Gitter vorgesehen werden. Die Zusatzinformationen können auf der Vorder- und/ oder Rückseite aufgebracht werden. Bevorzugt werden sie aufgedruckt. Die Zusatzinformationen können visuell sichtbar oder visuell nicht sichtbar sein, Lumineszenz-, Infrarot-Eigenschaften, elektrische Eigenschaften (wie z.B. die elektrische Leitfähigkeit) und/oder magnetische Eigenschaften aufweisen.

Als Material für das Gitter können z.B. Offset- oder Hochdruckfarben eingesetzt werden. Diese können UV-trocknend, oxidativ/ physikalisch trocknend, oxidativ/UV-trocknend und/oder physikalisch/UV-trocknend sein. Die Farben für das Gitter können zumindest ein oberflächenaktives Additiv enthalten, wie z.B. Silikonöl, Wachs etc.

Das gedruckte Gitter und/oder die gedruckten Informationselemente können ferner (z.B. teilweise) in direkter Passerung mit weiteren Sicherheitsmerkmalen, wie Durchsichtsregister, Effektfarben auf Basis von Interferenzpigmenten etc., appliziert werden.

Bei dem erfindungsgemäßen Verfahren kann als Material für das Gitter und/oder für die Linsen ein Material verwendet werden, das zumindest eine der folgenden Eigenschaften als zusätzliche auswertbare Information aufweist: Lumineszenz-Eigenschaft, UV-Eigenschaft, elektrische Eigenschaft, magnetische Eigenschaft, Interferenz-Eigenschaft, Farb-Eigenschaft. Die Auswertung kann visuell oder mittels einer Messvorrichtung erfolgen.

So kann für das Gitter z.B. 98% Transparentweiß Nr. 680170 (oxidativ/ physikalisch trocknende Farbe von Gleitsmann Security Inks) mit 2% TEGO Gluide 482 (Silikonöl-Emulsion auf Basis von 10-25% C11-C15 Alkohol) oder 93% Transparentweiß Nr. 680170 (oxidativ/physikalisch trocknende Farbe von Gleitsmann Security Inks) mit 2% TEGO Gluide 482 (Silikonöl-Emulsion auf Basis von 10-15% C11-C15 Alkohol) und mit 5% Paraffinwachs (bevorzugt reinst) verwendet werden.

Als Material für die Linsen kann z.B. 100% Siebdrucklack L 63074 (UV-trocknender Lack ohne oberflächenaktive Substanzen, wie Verlaufsmittel und Entschäumer, der Firma Pröll KG) verwendet werden.

Als reflektierende Schicht kann z.B. eine Farbschicht mit Effektpigmenten und/oder Aluminium-Flakes verwendet werden. So kann z.B. eine Siebdruck-Effektfarbe mit 85% Siebdrucklack L 63074 (UV-trocknender Lack ohne oberflächenaktive Substanzen, wie Verlaufsmittel und Entschäumer, der Firma Pröll KG) mit 15% Effektpigmente Iriodin 111 der Firma Merck verwendet werden.

Die Linsen können insbesondere so ausgebildet sein, dass die damit entstandene Mikrorauigkeit einen Soundeffekt beim Reiben über die Linsenoberflächen erzeugen. Der Soundeffekt kann richtungsabhängig sein, wenn die Linsen nicht rotationssymmetrisch gebildet sind.

Ferner kann der Soundeffekt eine Klangänderung durch Modulierung der Linsendurchmesser und/oder der Linsenabstände aufweisen.

Auf den Informationselementen kann beispielsweise eine deckende Farbe (beispielsweise im ähnlichen oder gleichen Farbton wie die Informationselemente) gedruckt werden, welche mittels Laserstrahlung abtragbar und/oder modifizierbar (z.B. Änderung des Farbtons und/oder der Transparenz) ist. Dadurch können weitere Informationen erzeugt werden, die optisch wahrnehmbar sind. Beispielsweise kann das Array der Linsen als Motiv freigelegt werden.

Es ist auch möglich, in einem Teilbereich zunächst eine erste Farbe zu drucken. Anschließend wird dieser Teilbereich flächig mit einer zweiten Farbe beschichtet. Die erste Farbe ist bevorzugt so ausgewählt, dass sie mittels Laserstrahlung abgetragen werden kann. Die zweite Farbe ist bevorzugt so ausgebildet, dass sie mit der Laserstrahlung nicht abgetragen werden kann. Bei Einwirkung der Laserstrahlung reißt somit die vom Laser abgetragene erste Farbe den darüber befindlichen Abschnitt der zweiten Farbe mit weg. Dies kann auch zur Bildung eines Informationselementes genutzt werden.

Die Linsen können sphärische Linsen und/ oder lentikulare Linsen sein. Die ersten und/oder zweiten Abschnitte des Gitters und/oder des zweiten Gitters können regelmäßig (z.B. mit einer konstanten Periode) oder unregelmäßig angeordnet sein (in einer oder in zwei verschiedene Richtungen).

Bei dem Auftragen des Linsenmaterials auf das Gitter und/oder auf das zweite Gitter handelt es sich bevorzugt um ein vollflächiges Auftragen.

Es wird ferner ein optisches Element mit einem transparenten oder transluzenten Substrat, das eine Vorderseite und eine Rückseite aufweist, bereitgestellt, wobei auf der Rückseite Informationselemente gedruckt sind, auf der Vorderseite ein Gitter gedruckt ist, das zu den Informationselementen gepassert ist und erste und zweite Abschnitte aufweist, und Linsen auf der Vorderseite in den ersten Abschnitten ausgebildet sind, wobei die Linsen aus einem Material gebildet sind, das von den ersten Abschnitten des Gitters abgestoßen ist und/oder wird.

Das erfindungsgemäße optische Element kann weitere Merkmale aufweisen, die im Zusammenhang mit dem erfindungsgemäßen Verfahren zur Herstellung des optischen Elementes (einschließlich seiner Weiterbildungen) beschrieben sind.

Insbesondere kann das erfindungsgemäße optische Element als Sicherheitselement ausgebildet sein und/oder verwendet werden.

Das transparente oder transluzente Substrat kann beispielsweise einen Bereich einer Polymerbanknote, einer Kreditkarte, einer EC-Karte, einer ChipKarte, eines Laminatfensters einer papierbasierten Banknote oder ein sonstiger Bereich eines Wertdokumentes sein. Das optische Element kann insbesondere als Sicherheitsfaden, Aufreißfaden, Sicherheitsband, Sicherheitsstreifen, Patch oder als Etikett ausgebildet sein. Insbesondere kann das optische Element Ausnehmungen oder transparente oder transluzente Bereiche überspannen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Figuren, die auch erfindungswesentliche Merkmale offenbaren, noch näher erläutert. Zu deren Anschaulichkeit wird in den Figuren zumindest teilweise auf eine maßstabs- und proportionsgetreue Darstellung und auf Schraffuren verzichtet. Es zeigen:
- Fig. 1: eine schematische Schnittansicht eines erfindungsgemäßen optischen Elementes;
- Fig. 2: das Substrat des optischen Elementes gemäß Fig. 1;
- Fig. 3: das mit dem Gitter und den Informationselementen bedruckte Substrat gemäß Fig. 2;
- Fig. 4: eine Ansicht der Vorderseite 3 des optischen Elementes gemäß Fig. 1;
- Fig. 5: eine Ansicht gemäß Fig. 4 einer weiteren Ausführungsform des erfindungsgemäßen optischen Elementes;
- Fig. 6: eine Schnittansicht einer weiteren Ausführungsform des erfindungsgemäßen optischen Elementes;
- Fig. 7: eine Schnittansicht einer weiteren Ausführungsform des erfindungsgemäßen optischen Elementes;
- Fig. 8: eine Schnittansicht einer weiteren Ausführungsform des erfindungsgemäßen optischen Elementes;
- Fig. 9: eine Schnittansicht einer weiteren Ausführungsform des erfindungsgemäßen optischen Elementes;
- Fig.10: eine Schnittansicht einer weiteren Ausführungsform des erfindungsgemäßen optischen Elementes;
- Fig. 11: eine Schnittansicht einer weiteren Ausführungsform des erfindungsgemäßen optischen Elementes;
- Fig. 12: eine Ansicht der Vorderseite 3 einer weiteren Ausführungsform des optischen Elementes 1;
- Fig. 13: eine Ansicht der Rückseite 4 des optischen Elementes 1 gemäß Fig. 12, und
- Fig. 14: eine Draufsicht einer Banknote mit dem erfindungsgemäßen optischen Element 1.

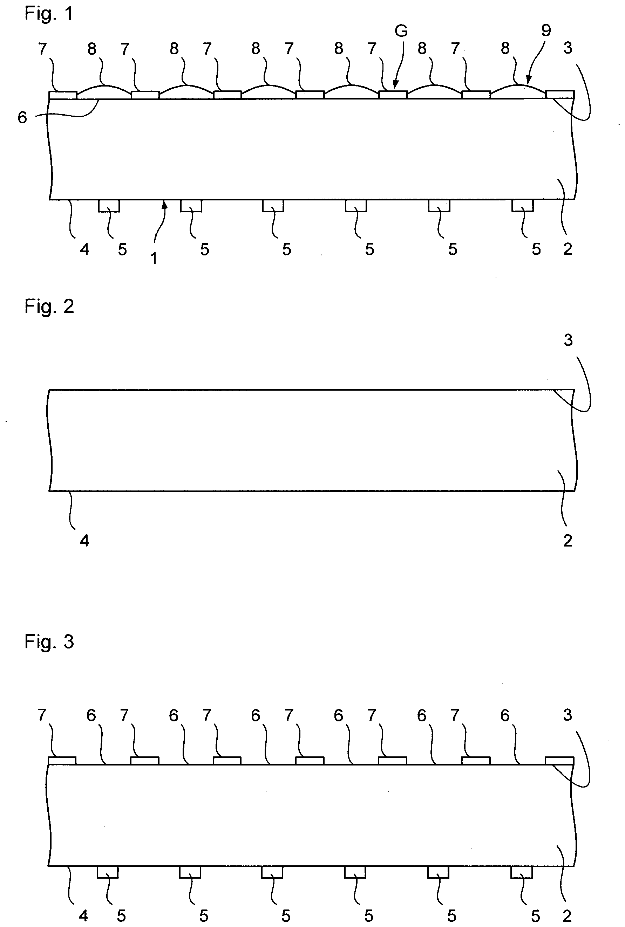

Bei der in Fig. 1 gezeigten Ausführungsform umfasst das erfindungsgemäße optische Element 1 ein transparentes oder transluzentes Substrat 2 mit einer Vorderseite 3 und einer Rückseite 4.

Auf der Rückseite 4 sind Informationselemente 5 aufgedruckt. Die Informationselemente 5 können beispielsweise Zahlen, Buchstaben, Symbole oder Kombinationen davon umfassen. Auch ist es möglich, dass die Informationselemente 5 ein Segment oder mehrere Segmente von Zahlen, Buchstaben, Symbolen oder Motiven umfassen.

Auf der Vorderseite 3 ist ein mehrere Abschnitte 6 begrenzendes Gitter G aufgedruckt, das zu den Informationselementen 5 gepassert ist. Die Bereiche des Gitters G, in dem Material auf der Vorderseite 3 gedruckt ist, können als erste Abschnitte 7 des Gitters G und die dadurch begrenzten Abschnitte 6 können als zweite Abschnitte 6 des Gitters G bezeichnet werden. In den zweiten Abschnitten 6 sind Linsen 8 gebildet. Die Materialien für das Gitter G und die Linsen 8 sind so gewählt, dass das Material der Linsen 8 von den ersten Abschnitten 7 des Gitters G abgestoßen ist und/oder wird. Dies führt in vorteilhafter Weise dazu, dass die gebildeten Linsen 8 zu den Informationselemente 5 gepassert gebildet sind. Somit kann ein gewünschter optischer Effekt erzielt werden. Beispielsweise kann ein Betrachter bei Blick auf die Vorderseite 3 die Informationselemente 5 mittels der Linsen 8 vergrößert wahrnehmen.

Zur Herstellung des optischen Elements 1 gemäß Fig. 1 wird zunächst das Substrat 2 bereitgestellt, wie in Fig. 2 gezeigt ist.

Danach werden mittels Simultandruck die Informationselemente 5 auf die Rückseite 4 und das Gitter G bzw. die ersten Abschnitte 7 auf die Vorderseite 3 gedruckt. Dies kann z.B. dadurch realisiert werden, dass das Substrat 2 in einer Druckmaschine zwischen zwei Gummituchzylindern geführt wird, wobei jeder dieser Gummituchzylinder gleichzeitig die Aufgabe eines Gegendruckzylinders für den gegenüberliegenden Farbtransferzylinder (Gummituchzylinder) wahrnimmt. Somit ist es möglich, den Vorderseitendruck gepassert zum Rückseitendruck zu realisieren. Insbesondere kann auch ein mehrfarbiger Vorderseitendruck gepassert zum Rückseitendruck oder ein mehrfarbiger Rückseitendruck gepassert zum Vorderseitendruck durchgeführt werden.

Einer der beiden Gummituchzylinder kann durch einen Druckplattenzylinder ersetzt werden. Es können auch beide Gummituchzylinder durch Druckplattenzylinder ersetzt werden.

Als Material für die ersten Abschnitte 7 des Gitters G, die mehrere zweite Abschnitte 6 auf der Vorderseite 3 begrenzen, wird hier ein hydrophobes Material verwendet. Die maximale Ausdehnung der zweiten Abschnitte 6 der Vorderseite 3 kann beispielsweise im Bereich von 40 µm bis 300 µm liegen. Der Abstand der einzelnen zweiten Abschnitte 6 und somit die Linienstärke des Gitters G bzw. der ersten Abschnitte 7 kann im Bereich von 40 µm bis 100 µm liegen.

Danach wird auf der Vorderseite 3 ein transparenter Lack auf das Gitter G z.B. durch Überdruck aufgebracht, der eine komplementäre Eigenschaft zu dem hydrophoben Material des ersten Abschnitts 7 aufweist. Der Lack ist hier hydrophil. Somit wird der Lack von den ersten Abschnitten 7 des Gitters G abgestoßen, so dass sich kleine Lacktropfen in den zweiten Abschnitten 6 formieren.

Diese Tropfen weisen die gewünschte Linsenform auf, so dass nach Aushärtung des Lackes (z.B. durch Trocknung oder UV-Bestrahlung) die gewünschten Linsen 8 vorliegen, die ein Linsenarray 9 bilden, das optimal zu den Informationselementen 5 gepassert ist, wie in Fig. 1 dargestellt ist.

Das Aufbringen des Lacks kann beispielsweise mittels Sieb-, Flexo-, Tief- oder Ink-Jet-Druck durchgeführt werden.

Natürlich ist es auch möglich, in dem in Fig. 3 gezeigten Schritt das Gitter G aus einem hydrophilen Material zu drucken. In diesem Fall kann z.B. ein Lack mit komplementären Eigenschaften eingesetzt werden.

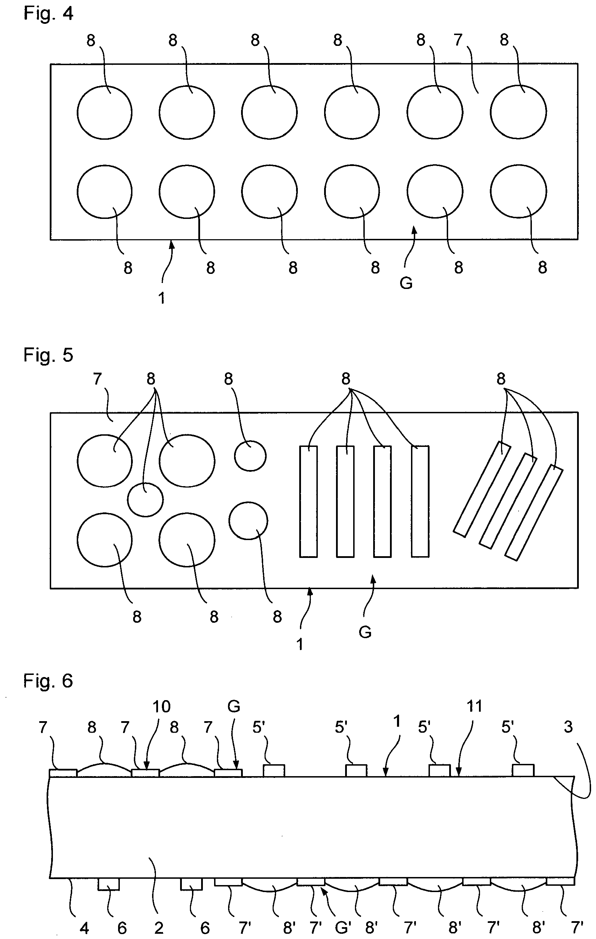

Wie in der in Fig. 4 gezeigten Draufsicht auf die Vorderseite 3 des optischen Elementes 1 von Fig. 1 ersichtlich ist, können die Linsen 8 in einem regelmäßigen Muster angeordnet sein. Dies ist jedoch nicht zwingend notwendig.

Wie in der in Fig. 5 gezeigten Abwandlung können die Linsen 8 auch unregelmäßig angeordnet sein. Des Weiteren müssen die Linsen 8 in Draufsicht gesehen nicht rund sein. Es sind auch andere Formen möglich, wie in Fig. 5 angedeutet ist. Die Umrissform der Linsen 8 wird durch die entsprechende Form der zweiten Abschnitte 6, die durch die ersten Abschnitte 7 begrenzt sind, bestimmt.

In Fig. 6 ist eine Abwandlung des erfindungsgemäßen optischen Elementes 1 gezeigt. Bei dieser Abwandlung weist das Substrat 2 einen ersten und zweiten Teilbereich 10, 11 auf, wobei der erste Teilbereich 10 in gleicher Weise ausgebildet ist wie bei dem optischen Element 1 gemäß Fig. 1 und der zweite Teilbereich 11 in der Art abgewandelt ist, dass Informationselemente 5' auf der Vorderseite 3 und ein Gitter G' zusammen mit den Linsen 8' auf der Rückseite 4 ausgebildet sind. Die ersten Abschnitte 7' des Gitters G' und die Linsen 8' im zweiten Teilbereich 11 weisen wiederum komplementäre Eigenschaften auf (z.B. hydrophob und hydrophil) und die Herstellung des Gitters G' und der Informationselemente 5' im zweiten Teilbereich 11 erfolgt bevorzugt durch Simultandruck in gleicher Weise wie bei dem optischen Element 1 gemäß Fig. 1. Danach wird das Linsenmaterial zur Bildung der Linsen 8' aufgebracht (z.B. aufgedruckt) und bevorzugt ausgehärtet. Besonders bevorzugt werden beide Gitter G, G' sowie die Informationselemente 5, 5' der beiden Teilbereiche 11, 12 durch Simultandruck in einem einzigen Schritt gedruckt.

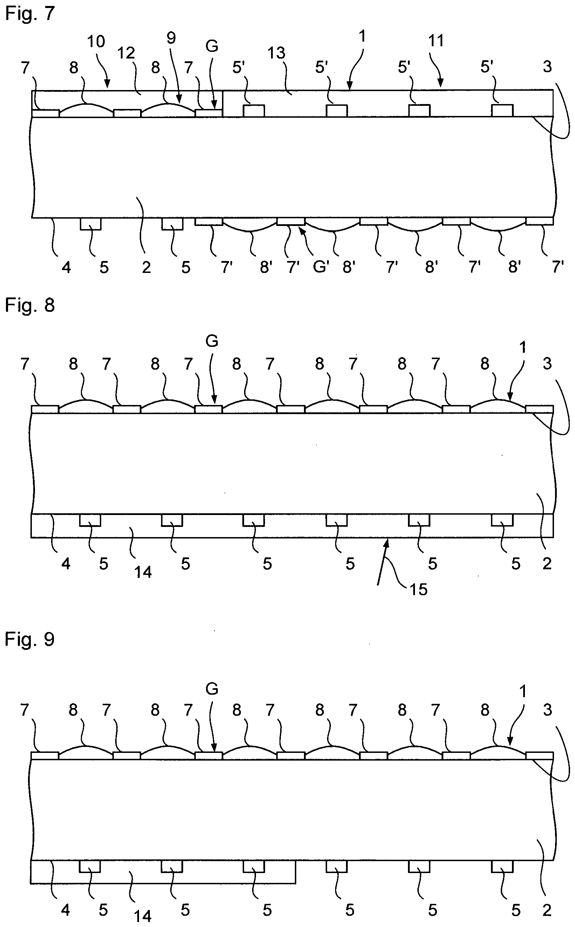

In Fig. 7 ist eine Abwandlung der Ausführungsform gemäß Fig. 6 gezeigt. Dabei ist im ersten Teilbereich 10 auf dem Linsenarray 9 eine Reflektorschicht 12 gebildet. Dabei kann es sich z.B. um eine mit Aluminium pigmentierte Siebdruckfarbe handeln. Durch diese Ausbildung sind auf der Vorderseite 3 im ersten Teilbereich 10 Hohlspiegel gebildet (Linse 8 in Verbindung mit der Reflektorschicht 12), so dass von der Rückseite 4 her betrachtet die Informationselemente 5 beispielsweise vergrößert abgebildet werden.

Im zweiten Teilbereich 11 ist eine Deckschicht 13 gebildet. Dabei kann es sich z.B. um eine deckende Farbe handeln, so dass ein Durchscheinen bei Betrachtung des zweiten Teilbereiches 11 von der Rückseite 4 her vermieden wird. Es können somit störende Durchsichteinflüsse vermieden werden. Die Deckschicht 13 zeigt einen anderen Hell-Dunkel-Kontrast und/oder Farbton wie die Informationselemente 5'. Bevorzugt ist die Deckschicht 13 lichtreflektierend.

Die in Verbindung mit Fig. 7 beschriebenen Schichten 12 und 13 können natürlich auch bei der Ausführungsform des optischen Elements 1 gemäß Fig. 1 angewendet werden. Insbesondere kann beispielsweise nur die Reflektorschicht 12 oder nur die Deckschicht 13 auf dem Linsenarray 9 ausgebildet werden.

In Fig. 8 ist eine Abwandlung des optischen Elementes 1 gemäß Fig. 1 gezeigt. Bei dieser Abwandlung ist eine Farbschicht 14 über die Informationselemente 5 gedruckt. Die Farbschicht 14 ist so gewählt, dass bei Vorhandensein der Farbschichten keine Information bei Betrachtung von der Rück- und Vorderseite 3, 4 her für einen Betrachter wahrnehmbar ist. Dies ist der Fall, wenn die Farbschicht 14 einen ähnlichen Farbton wie die Informationselemente 5 aufweist.

Die Farbschicht 14 kann selektiv mittels Laserstrahlung entfernt werden, wie in Fig. 8 durch den Pfeil mit dem Bezugszeichen 15 angedeutet ist.

Dies führt zu einem optischen Element 1 gemäß Fig. 9, bei dem die drei rechten Linsen 8 die entsprechenden Informationselemente 5 vergrößert darstellen können.

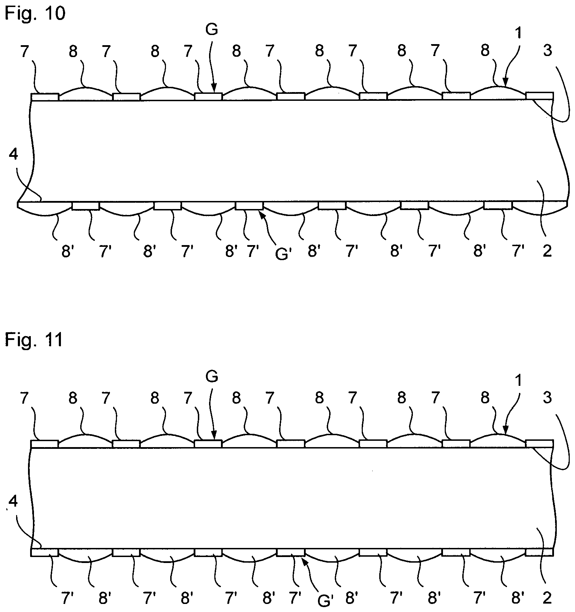

In Fig. 10 ist eine weitere Ausführungsform des erfindungsgemäßen optischen Elementes 1 gezeigt, bei der sowohl auf der Vorderseite 3 als auch auf der Rückseite 4 ein Gitter G, G' sowie Linsen 8, 8' ausgebildet sind. Die Linsen 8 der Vorderseite 3 sind gegenüber den Linsen 8' der Rückseite 4 lateral etwas versetzt, so dass für die Linsen 8 die ersten Abschnitte 7' des Gitters G' auf der Rückseite 4 als Informationselemente dienen. Für die Linsen 8' der Rückseite 4 dienen die ersten Abschnitte 7 zwischen den Linsen 8 des Gitters G auf der Vorderseite 3 als Informationselemente.

Das optische Element 1 gemäß Fig. 10 kann in der Weise hergestellt werden, dass zunächst ein Substrat wie in Fig. 2 bereitgestellt wird und dann auf der Vorderseite 3 und der Rückseite 4 mittels Simultandruck die Gitter G, G' aufgedruckt werden. Danach wird auf der Vorderseite 3 und der Rückseite 4 der Lack für die Linsen 8, 8' aufgedruckt. Auch hier ist das Material für die ersten Abschnitte 7, 7' des Gitters G und G' bevorzugt ein hydrophobes oder hydrophiles Material. Der entsprechende Lack 8, 8' weist dann die entgegengesetzte Eigenschaft auf, so dass sich die Linsen 8, 8' bilden können.

In Fig. 11 ist eine Abwandlung der Ausführungsform von Fig. 10 gezeigt, bei der die Linsen 8, 8' einander gegenüberliegen, so dass jeweils zwei gegenüberliegende Linsen 8, 8' eine bikonvexe Linse bilden. In diesem Fall ist somit z.B. die Linse 8' für die Linse 8 das Informationselement 5.

Die bikonvexen Linsen können zur Selbstverifikation einer auf einem anderen Abschnitt des Substrates gedruckten Information verwendet werden. So kann z.B. das Substrat teilweise umgeschlagen werden.

Als Lack für die Linsen kann insbesondere eine UV-trocknender Lack eingesetzt werden.

Als Material für das oder die Gitter G, G' können z.B. UV-trocknende Offset- oder Hochdruckfarben eingesetzt werden. Es können auch oxidativ und/ oder physikalisch trocknende Offset- oder Hochdruckfarben eingesetzt werden. Des Weiteren können diese Farben oberflächenaktive Additive enthalten. Solche Additive können z.B. Silikonöl, Wachs, etc. sein.

Die Linsen 8, 8' können insbesondere solche Abmessungen aufweisen, dass beim Reiben über die Linsenflächen (z.B. mit einem Finger) ein Toneffekt erzeugt wird. Beispielsweise kann ein Ton mit konstanter Tonhöhe oder variierender Tonhöhe erzeugt werden. Insbesondere kann der Toneffekt in Abhängigkeit der Richtung des Darüberstreichens (beispielsweise in einer ersten Richtung und in einer zweiten Richtung, die quer zur ersten Richtung verläuft) unterschiedlich sein.

Ferner können bei dem Toneffekt, der auch als Soundeffekt bezeichnet werden kann, eine Änderung während des Darüberstreichens durch eine Modellierung der Durchmesser der Linsen und/oder der Abstände der Linsen erzeugt werden.

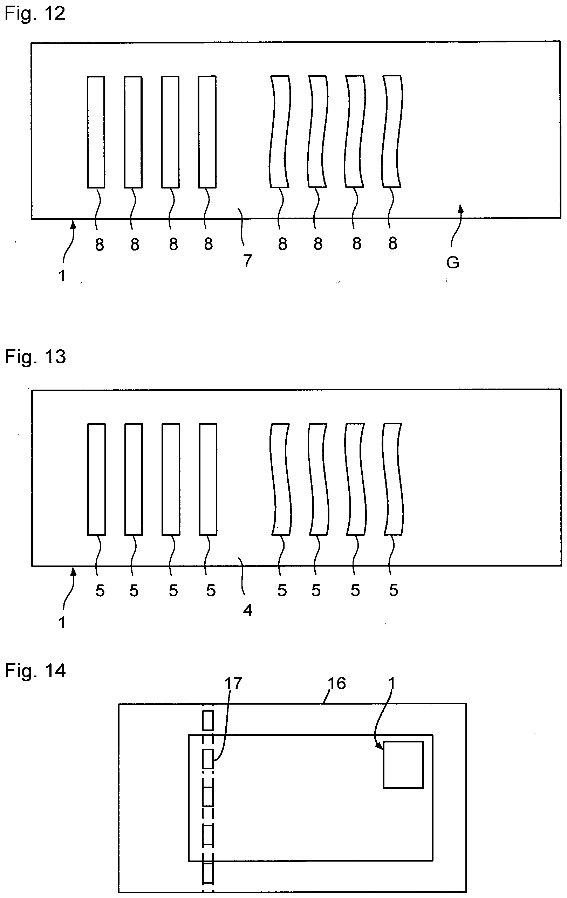

Die Linsen 8, 8' können beispielsweise sphärische Linsen sein. Sie können jedoch auch als lentikulare Linsen ausgebildet sein, wie dies in Fig. 12 schematisch dargestellt ist. Fig. 12 zeigt eine Ansicht der Vorderseite 3 einer weiteren Ausführungsform des optischen Elementes 1. Bei dieser Ausführungsform sind auf der linken Seite vier sich geradlinig erstreckende lentikulare Linsen 8 gezeigt. Die Linsen 8 können sich jedoch in Längsrichtung nicht nur geradlinig erstrecken, sondern können jede beliebige Form aufweisen. Insbesondere können sie gekrümmt oder wellenförmig sein, wie dies durch die vier rechts dargestellten Linsen 8 angedeutet ist.

In Fig. 13 ist eine Ansicht der Rückseite 4 des optischen Elementes 1 gemäß Fig. 12 gezeigt. Die Informationselemente 5 sind bevorzugt in der gleichen Form gebildet, die die gegenüberliegenden Linsen 8 aufweisen. Somit erstrecken sich die vier links eingezeichneten Informationselemente 5 geradlinig, während die vier rechts eingezeichneten Informationselemente 5 die wellenförmige Form der entsprechenden gegenüberliegenden Linsen 8 aufweisen.

In Fig. 14 ist eine Banknote 16 schematisch dargestellt, in der das erfindungsgemäße optische Element 1 als Sicherheitselement so integriert ist, dass es bestimmungsgemäß benutzt werden kann. Beispielsweise überspannt das optische Element 1 eine Ausnehmung in der Banknote 16.

Alternativ kann das optische Element 1 als Sicherheitsfaden 17 ausgebildet sein. In diesem Fall kann z.B. die Reflektorschicht 12 auf den Linsen 8 ausgebildet sein, so dass diese als Hohlspiegel wirken.

### Bezugszeichenliste

- 1: optisches Element
- 2: Substrat
- 3: Vorderseite
- 4: Rückseite
- 5,5': Informationselement
- 6: zweiter Abschnitt
- 7, 7': erster Abschnitt
- 8,8': Linse
- 9: Linsenarray
- 10: erster Teilbereich
- 11: zweiter Teilbereich
- 12: Reflektorschicht
- 13: Deckschicht
- 14: Farbschicht
- 15: Laserstrahlung
- 16: Banknote
- 17: Sicherheitsfaden
- G, G': Gitter

## Patentansprüche

1. Verfahren zum Herstellen eines optischen Elementes (1), bei dem
a) auf einer Rückseite (4) eines transparenten oder transluzenten Substrats (2) Informationselemente (5) gedruckt werden,
**dadurch gekennzeichnet, dass**
b) auf einer Vorderseite (3) des Substrats (2) ein Gitter (G) gedruckt wird, das zu den Informationselementen (5) gepassert ist sowie erste und zweite Abschnitte (7, 6) aufweist, und
c) auf das Gitter (G) zumindest in einem Teilbereich (10) ein Linsenmaterial aufgetragen wird, das von den ersten Abschnitten (7) des Gitters (G) abgestoßen wird, so dass aus dem abgestoßenen Linsenmaterial in den zweiten Abschnitten (6) Linsen (8) gebildet werden,
wobei
- entweder die ersten Abschnitte (7) des Gitters (G) aus einem farbigen Material mit hydrophober oder hydrophiler Eigenschaft gedruckt werden, das Linsenmaterial eine dazu komplementäre Eigenschaft aufweist und das im Schritt b) gedruckte Gitter (G) mit seinen ersten Abschnitten (7) die zweiten Abschnitte (6) begrenzt,
- oder die Vorderseite (3) des Substrates (2) eine hydrophobe oder hydrophile Eigenschaft aufweist und das Gitter (G) aus einem farbigen Material mit dazu komplementärer hydrophiler oder hydrophober Eigenschaft gedruckt wird, wobei das Linsenmaterial so gewählt wird, dass das farbige Material anziehend wirkt.

2. Verfahren nach Anspruch 1 , bei dem die Schritte a) und b) gleichzeitig durchgeführt werden.

3. Verfahren nach einem der obigen Ansprüche, bei dem im Schritt c) als Linsenmaterial ein Lack aufgetragen wird.

4. Verfahren nach einem der obigen Ansprüche, bei dem im Schritt c) das Linsenmaterial aufgedruckt wird.

5. Verfahren nach einem der obigen Ansprüche, bei dem zumindest auf einem Teil der Linsen (8) eine reflektierende Schicht aufgebracht wird.

6. Verfahren nach einem der obigen Ansprüche, bei dem zumindest auf einem Teil der Informationselemente (5) eine reflektierende und/oder andersfarbige Schicht aufgebracht wird.

7. Verfahren nach einem der obigen Ansprüche, bei dem zumindest auf einem Teil der Informationselemente (5) eine Farbschicht (14) aufgedruckt wird, welche danach teilweise entfernt wird und/oder in der in zumindest einem Teilbereich (10) eine Farbänderung bewirkt wird.

8. Verfahren nach einem der obigen Ansprüche, bei dem auf zumindest einem Teil der Informationselemente (5) eine transparente Interferenzschicht aufgebracht wird, deren Interferenzeffekt vor einem dunklen Hintergrund visuell erkennbar ist.

9. Verfahren nach einem der obigen Ansprüche, bei dem für das Gitter (G) und/oder für die Linsen (8) ein Material verwendet wird, das zumindest eine der folgenden Eigenschaften als zusätzliche auswertbare Information aufweist: Lumineszenz-Eigenschaft, Infrarot-Eigenschaft, elektrische Eigenschaft, magnetische Eigenschaft, Interferenz-Eigenschaft, Farb-Eigenschaft.

10. Verfahren nach einem der obigen Ansprüche, bei dem die im Schritt a) gedruckten Informationselemente (5) ein zweites Gitter (G') bilden, das erste und zweite Abschnitte (7', 6) aufweist und zu dem im Schritt b) auf die Vorderseite (3) gedruckten Gitter (G) gepassert ist, wobei auf das zweite Gitter (G)' ein zweites Linsenmaterial aufgetragen wird, das von den ersten Abschnitten (7') des zweiten Gitters (G') abgestoßen wird, so dass aus dem abgestoßenen zweiten Linsenmaterial in den zweiten Abschnitt (6) des zweiten Gitters (G') zweite Linsen (8') gebildet werden.

11. Verfahren nach einem der Ansprüche 1 bis 9, bei dem auf der Vorderseite (3) neben dem Gitter (G) zweite Informationselemente (5') gedruckt werden,
auf der Rückseite (4) ein zweites Gitter (G') gedruckt wird, das zu den zweiten Informationselementen (5') gepassert ist sowie erste und zweite Abschnitte (7', 6) aufweist, und
auf das zweite Gitter (G') ein zweites Linsenmaterial aufgetragen wird, das von den ersten Abschnitten (7') des zweiten Gitters (G') abgestoßen wird, so dass aus dem abgestoßenen zweiten Linsenmaterial in den zweiten Abschnitten (6) des zweiten Gitters (G') zweite Linsen (8') gebildet werden.

12. Optisches Element mit
einem transparenten oder transluzenten Substrat (2), das eine Vorderseite (3) und eine Rückseite (4) aufweist, und
auf der Rückseite (4) gedruckten Informationselementen (5),
**dadurch gekennzeichnet, dass** das optische Element durch ein Verfahren mit den Schritten eines der obigen Ansprüche so hergestellt wurde, dass es ein auf der Vorderseite (3) gedrucktes Gitter (G), das zu den Informationselementen (5) gepassert ist sowie erste und zweite Abschnitte (7, 6) aufweist, und
Linsen (8), die auf der Vorderseite in den zweiten Abschnitten (6) ausgebildet sind, aufweist,
wobei die Linsen (8) aus einem Material gebildet sind, das von den ersten Abschnitten (7) des Gitters (G) abgestoßen ist,
wobei
- entweder die ersten Abschnitte (7) des Gitters (G) aus einem farbigen Material mit hydrophober oder hydrophiler Eigenschaft gedruckt sind, das Linsenmaterial eine dazu komplementäre Eigenschaft aufweist und das gedruckte Gitter (G) mit seinen ersten Abschnitten (7) die zweiten Abschnitte (6) begrenzt,
- oder die Vorderseite (3) des Substrates (2) eine hydrophobe oder hydrophile Eigenschaft aufweist und das Gitter (G) aus einem farbigen Material mit dazu komplementärer hydrophiler oder hydrophober Eigenschaft gedruckt ist, wobei das Linsenmaterial so gewählt wird, dass das farbige Material anziehend wirkt.

## Claims

1. A method for producing an optical element (1), in which
a) information elements (5) are printed on a rear side (4) of a transparent or translucent substrate (2),
**characterized in that**
b) a grid (G) is printed on a front side (3) of the substrate (2), the grid (G) being matched to the information elements (5) and comprising first and second portions (7, 6), and
c) a lens material is applied to the grid (G) at least in a partial region (10), which lens material is repelled from the first portions (7) of the grid (G), so that lenses (8) are formed from the repelled lens material in the second portions (6),
wherein
- either the first portions (7) of the grid (G) are printed from a colored material having a hydrophobic or hydrophilic property, the lens material comprises a property complementary thereto, and the grid (G) printed in step b) delimits with its first portions (7) the second portions (6),
- or the front side (3) of the substrate (2) comprises a hydrophobic or hydrophilic property and the grid (G) is printed from a colored material having a complementary hydrophilic or hydrophobic property, the lens material being selected so as to attract the colored material.

2. The method of claim 1, wherein steps a) and b) are performed simultaneously.

3. The method according to any of the above claims, wherein in step c) a varnish is applied as lens material.

4. The method according to any of the above claims, wherein in step c) the lens material is imprinted.

5. The method according to any of the above claims, in which a reflective layer is applied to at least part of the lenses (8).

6. The method according to any of the above claims, in which a reflective and/or differently colored layer is applied to at least part of the information elements (5).

7. The method according to any of the above claims, in which a color layer (14) is printed on at least part of the information elements (5), which layer is subsequently partially removed and/or in which a color change is effected in at least one partial region (10).

8. The method according to any of the above claims, in which a transparent interference layer is applied to at least part of the information elements (5), the interference effect of which layer is visually detectable against a dark background.

9. The method according to any of the above claims, wherein for the grid (G) and/or for the lenses (8) a material is used which has at least one of the following properties as additional evaluable information: luminescence property, infrared property, electrical property, magnetic property, interference property, color property.

10. The method according to any of the above claims, wherein the information elements (5) printed in step a) form a second grid (G') having first and second portions (7', 6) and matched to the grid (G) printed on the front side (3) in step b), wherein a second lens material is applied to the second grid (G)' and repelled from the first portions (7') of the second grid (G') so that second lenses (8') are formed from the repelled second lens material in the second portion (6) of the second grid (G').

11. The method according to any of claims 1 to 9, wherein second information elements (5') are printed on the front side (3) next to the grid (G),
a second grid (G') is printed on the rear side (4), the second grid (G') being matched to the second information elements (5') and comprising first and second portions (7', 6), and
a second lens material is applied to the second grid (G') and is repelled from the first portions (7') of the second grid (G') so that second lenses (8') are formed from the repelled second lens material in the second portions (6) of the second grid (G').

12. An optical element with
a transparent or translucent substrate (2) comprising a front side (3) and a rear side (4), and
information elements (5) printed on the rear side (4),
**characterized in that** the optical element has been produced by a method comprising the steps of any of the above claims so as to comprise a grid (G) printed on the front side (3), the grid being matched to the information elements (5) and comprises first and second portions (7, 6), and
lenses (8) formed on the front side in the second portions (6),
wherein the lenses (8) are formed of a material repelled from the first portions (7) of the grid (G),
wherein
- either the first portions (7) of the grid (G) are printed from a colored material having a hydrophobic or hydrophilic property, the lens material comprises a property complementary thereto, and the printed grid (G) delimits with its first portions (7) the second portions (6),
- or the front side (3) of the substrate (2) has a hydrophobic or hydrophilic property and the grid (G) is printed from a colored material having a complementary hydrophilic or hydrophobic property, the lens material being selected so that the colored material is attractive.

## Revendications

1. Procédé de fabrication d'un élément optique (1), avec lequel
a) des éléments d'information (5) sont imprimés sur un côté arrière (4) d'un substrat (2) transparent ou translucide,
**caractérisé en ce que**
b) une grille (G) est imprimée sur un côté avant (3) du substrat (2), laquelle est adaptée aux éléments d'information (5) et aussi présente des premières et deuxièmes portions (7, 6), et
c) un matériau de lentille est appliqué sur la grille (G), au moins dans une zone partielle (10), lequel est repoussé des premières portions (7) de la grille (G), de sorte que des lentilles (8) sont formées dans les deuxièmes portions (6) à partir du matériau de lentille repoussé,
- soit les premières portions (7) de la grille (G) étant imprimées avec un matériau coloré qui possède une propriété hydrophobe ou hydrophile, le matériau de lentille possédant une propriété complémentaire à celle-ci et la grille (G) imprimée à l'étape b) délimitant les deuxièmes portions (6) avec ses premières portions (7),
- soit le côté avant (3) du substrat (2) possédant une propriété hydrophobe ou hydrophile et la grille (G) étant imprimée avec un matériau qui possède une propriété hydrophile ou hydrophobe complémentaire à celle-ci, le matériau de lentille étant choisi de telle sorte que le matériau coloré a un effet attractif.

2. Procédé selon la revendication 1, avec lequel les étapes a) et b) sont exécutées simultanément.

3. Procédé selon l'une des revendications précédentes, avec lequel, à l'étape c), un vernis est appliqué en tant que matériau de lentille.

4. Procédé selon l'une des revendications précédentes, avec lequel, à l'étape c), le matériau de lentille est imprimé.

5. Procédé selon l'une des revendications précédentes, avec lequel une couche réfléchissante est appliquée sur au moins une partie des lentilles (8).

6. Procédé selon l'une des revendications précédentes, avec lequel une couche réfléchissante et/ou d'une autre couleur est appliquée sur au moins une partie des éléments d'information (5).

7. Procédé selon l'une des revendications précédentes, avec lequel une couche de couleur (14) est imprimée sur au moins une partie des éléments d'information (5), laquelle est ensuite partiellement retirée et/ou un changement de couleur est produit dans l'au moins une zone partielle (10).

8. Procédé selon l'une des revendications précédentes, avec lequel une couche d'interférence transparente est appliquée sur au moins une partie des éléments d'information (5), dont l'effet d'interférence peut être reconnu visuellement devant un fond sombre.

9. Procédé selon l'une des revendications précédentes, avec lequel le matériau qui est utilisé pour la grille (G) et/ou pour les lentilles (8) présente au moins l'une des propriétés suivantes en tant qu'information interprétable supplémentaire : propriété de luminescence, propriété infrarouge, propriété électrique, propriété magnétique, propriété d'interférence, propriété de couleur.

10. Procédé selon l'une des revendications précédentes, avec lequel les éléments d'information (5) imprimés à l'étape a) forment une deuxième grille (G'), qui présente des premières et deuxièmes portions (7', 6) et qui est adaptée à la grille (G) imprimée sur le côté avant (3) à l'étape b), un deuxième matériau de lentille étant appliqué sur la deuxième grille (G'), lequel est repoussé par les premières portions (7') de la deuxième grille (G'), de sorte que des deuxièmes lentilles (8') sont formées dans les deuxièmes portions (6) de la deuxième grille (G') à partir du deuxième matériau de lentille repoussé.

11. Procédé selon l'une des revendications 1 à 9, avec lequel des deuxièmes éléments d'information (5') sont imprimés sur le côté avant (3) à côté de la grille (G), une deuxième grille (G') est imprimée sur le côté arrière (4), laquelle est adaptée aux deuxièmes éléments d'information (5') et présente des premières et deuxièmes portions (7', 6), et
un deuxième matériau de lentille est appliqué sur la deuxième grille (G'), lequel est repoussé par les premières portions (7') de la deuxième grille (G'), de sorte que des deuxièmes lentilles (8') sont formées dans les deuxièmes portions (6) de la deuxième grille (G') à partir du deuxième matériau de lentille repoussé.

12. Élément optique comprenant
un substrat (2) transparent ou translucide, qui présente un côté avant (3) et un côté arrière (4), et
des éléments d'information (5) imprimés sur le côté arrière (4),
**caractérisé en ce que** l'élément optique a été fabriqué par un procédé ayant les étapes des revendications précédentes de telle sorte qu'il présente une grille (G) imprimée sur le côté avant (3), laquelle est adaptée aux éléments d'information (5) et aussi présente des premières et deuxièmes portions (7, 6), et
présente des lentilles (8), qui sont formées sur le côté avant dans les deuxièmes portions (6),
les lentilles (8) étant formées dans un matériau qui est repoussé par les premières portions (7) de la grille (G),
- soit les premières portions (7) de la grille (G) étant imprimées avec un matériau coloré qui possède une propriété hydrophobe ou hydrophile, le matériau de lentille possédant une propriété complémentaire à celle-ci et la grille (G) imprimée délimitant les deuxièmes portions (6) avec ses premières portions (7),
- soit le côté avant (3) du substrat (2) possédant une propriété hydrophobe ou hydrophile et la grille (G) étant imprimée avec un matériau qui possède une propriété hydrophile ou hydrophobe complémentaire à celle-ci, le matériau de lentille étant choisi de telle sorte que le matériau coloré a un effet attractif.
